Europäisches Patentamt

European Patent Office

Office européen des brevets

(19)

(11) **EP 0 611 950 B1**

(12) **EUROPÄISCHE PATENTSCHRIFT**

(45) Veröffentlichungstag und Bekanntmachung des Hinweises auf die Patenterteilung:
**08.01.1997  Patentblatt 1997/02**

(51) Int Cl.6: **G01C 19/72**

(21) Anmeldenummer: **93102494.7**

(22) Anmeldetag: **17.02.1993**

(54) **Kompensation der Lichtquellenwellenlängenänderung in einem geregelten faseroptischen Sagnac-Interferometer**

Compensation of source wavelength changes in a closed-loop fibre optic sagnac interferometer

Compensation des changements de la longueur d'onde de la source de lumière dans un interferomètre du type sagnac à fibre optique et à boucle fermée

(84) Benannte Vertragsstaaten:
**DE FR GB IT**

(43) Veröffentlichungstag der Anmeldung:
**24.08.1994  Patentblatt 1994/34**

(73) Patentinhaber: **LITEF GmbH**
**D-79115 Freiburg (DE)**

(72) Erfinder: **Kemmler, Manfred**
**W-7801 Vörstetten (DE)**

(74) Vertreter:
**TER MEER - MÜLLER - STEINMEISTER & PARTNER**
**Mauerkircherstrasse 45**
**81679 München (DE)**

(56) Entgegenhaltungen:
**EP-A- 0 388 929            EP-A- 0 427 110**
**EP-A- 0 441 998            GB-A- 2 157 425**

## Beschreibung

Die Erfindung betrifft ein Verfahren zur Kompensation von Wellen längenänderungen der Lichtquelle und damit des wellenlängenabhängigen Skalenfaktors eines faseroptischen Sagnac-Interferometers mit geschlossenem Regelkreis zur Drehratenmessung, bei dem zwei aus der Lichtquelle stammende polarisierte und durch Strahlteilung erzeugte Lichtstrahlen in einem Phasenmodulator durch ein auf Phasenhübe von 2π begrenztes Signal moduliert, sodann in entgegengesetzten Richtungen in eine Faserspule eingestrahlt und anschließend wiedervereinigt werden. und bei dem das entstehende Interferenzbild einen Photodetektor beaufschlagt, dessen der Lichtintensität des Interferenzbildes entsprechendes Ausgangssignal nach Analog/Digitalwandlung über eine digitale Regelelektronik ein Stellsignal liefert, das digital/analog gewandelt zur Kompensation von nicht-reziproken Phasenverschiebungen der Lichtstrahlen am Phasenmodulator dient, wobei das analoge Stellsignal so verstärkt wird, daß der maximale Phasenhub des Phasenmodulators 2 π entspricht.

Bei faseroptischen Kreiseln mit digitaler Phasenrampenrückstellung, wie sie beispielsweise in EP-A1-0 441 998 sowie in EP-A-0 551 537 beschrieben sind, werden Änderungen der Lichtquellenwellenlänge und damit des Skalenfaktors entweder indirekt durch Stabilisieren der Lichtquellentemperatur und des Injektionsstroms der Lichtquelle minimiert oder es werden direkte Verfahren mittels zusätzlicher optischer Komponenten (Gitter, Interferometer) angewendet, um die Lichtquellenwellenlänge zu messen. Für das letztere Meßverfahren sei auf die Druckschrift EP-A1-0 460 268 hingewiesen.

Beim indirekten Verfahren durch Stabilisieren der Lichtquellentemperatur lassen sich Alterungseffekte an der Lichtquelle nicht erfassen. Bei den direkten Verfahren dagegen werden zusätzliche optische Bauteile mit der dazu erforderlichen Elektronik benötigt.

Der Erfindung liegt die Aufgabe zugrunde, ein Verfahren zur Kompensation von Lichtquellen-Wellellenlängenänderungen in einem faseroptischen Drehratensensor mit geschlossenem Regelkreis anzugeben, durch das sich einerseits Alterungseffekte der Lichtquelle erfassen lassen und bei dem andererseits zusätzliche optische Bauteile, wie sie bei direkten Verfahren zur Lichtquellen-Wellenlängenmessung erforderlich sind, nicht benötigt werden.

Das Kompensationsverfahren für Wellenlängenänderungen einer in einem faseroptischen Sagnac-Interferometer-Drehratensensor mit geschlossenem Regelkreis enthaltene Lichtquelle ist erfindungsgemäß dadurch gekennzeichnet, daß aus dem Stellwert der Regelelektronik, die den maximalen Modulationshub am Phasenmodulator auf 2π regelt, und der gemessenen Temperatur die Änderung der Wellenlänge der Lichtquelle berechnet wird und mit dem Ergebnis dieser Berechnung die Änderung des Skalenfaktors aufgrund einer Wellenlängenänderung rechnerisch kompensiert wird.

Die Erfindung macht sich die Erkenntnis zunutze, daß bei einem Regelkreis zur Phasenrampenrückstellung, wie er in EP-A1-0 441 998 bzw. in EP-92 100 460.2 beschrieben ist, der Spannungshub, der für eine Phasenverschiebung von 2 π im integriert-optischen Phasenmodulator notwendig ist, von der Lichtquellenwellenlänge abhängig ist. Bei den in den beiden genannten europäischen Patentanmeldungen beschriebenen faseroptischen Kreiseln mit geschlossenem Regelkreis wird die für die genannte Phasenverschiebung von 2π erforderliche Spannung geregelt. Erfindungsgemäß wird mit dem Wert dieser Spannung eine eventuelle Veränderung der Lichtquellenwellenlänge kompensiert. Da jedoch diese Spannung auch von der Temperatur des Phasenmodulators abhängt. ist erfindungsgemäß vorgesehen, diese Temperatur zu messen und bei der Generierung des Kompensationssignals für die Wellenhängenänderung zu berücksichtigen.

Mit dem erfindungsgemäßen Verfahren werden also Lichtquellenwellenlängenänderungen direkt erfaßt ohne zusätzlichen Aufwand an optischen Bauteilen, der dafür erforderlichen Elektronik und dergleichen. Der Temperaturfühler am Phasenmodulator ist in der Regel für die Temperaturmodellierung der Nullpunktfehler ohnehin vorhanden, so daß insoweit auch dafür kein zusätzlicher Aufwand erforderlich ist.

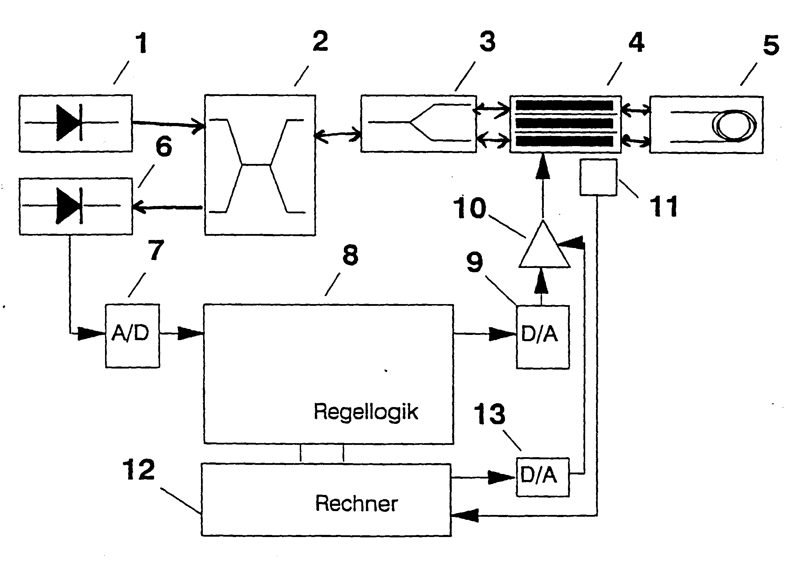

Das erfindungsgemäße Verfahren und vorteilhafte Einzelheiten werden nachfolgend unter Bezug auf die Zeichnung näher erläutert, deren **einzige Figur** als Prinzipdarstellung die wesentlichen Funktionsblöcke eines faseroptischen Kreisels mit geschlossenem Regelkreis und digitaler Regelelektronik verdeutlicht.

Ein von einer Lichtquelle 1, beispielsweise einer Superlumineszenzdiode ausgehender Lichtstrahl wird über einen Koppler 2 in einem Strahlteiler 3 in zwei Lichtstrahlen aufgeteilt. Die beiden so erzeugten Lichtstrahlen werden nach Durchlaufen eines Phasenmodulators 4 in die entgegengesetzten Enden einer Faserspule 5 eingestrahlt. Nach Durchlaufen der Faserspule 5 erfolgt die Wiedervereinigung der beiden Strahlen im Strahlteiler 3. Nach Durchlaufen des Kopplers 2 in entgegengesetzter Richtung wird das Interferenzbild der beiden wiedervereinigten Strahlanteile durch einen Fotodetektor 6 erfaßt, dessen Ausgangssignal durch einen Analog/Digital-Wandler 7 digitalisiert und dann in einer durch einen Mikroprozessor 12 überwachten Regel- und Auswertelogik 8 ein aus mehreren Signalanteilen zusammengesetztes Modulationssignal liefert, das über einen Digital/Analog-Wandler 9 ein (Rück-)Stellsignal für den Phasenmodulator 4 liefert. Die Verstärkung des Analogsignales des Digital/Analog-Wandlers 9 wird über einen Hilfsregelkreis, wie er in der europäischen Patentanmeldung 92 100 460.2 ausführlich beschrieben ist, mit dem steuerbaren Verstärker 10 so geregelt, daß der maximale Phasenhub des Phasenmodulators unter allen Umständen 2π entspricht. Dabei wird der erforderliche Wert der Verstärkung im Rechner 12 berechnet und über einen Digital/Analog-Wandler 13 die Verstärkung des Verstärkers 10 variiert. Da dieser Hilfsregelkreis Bestandteil des Rechners 12 ist, steht der aktuelle Wert der Referenzspannung direkt zur Verfügung. Dieser Wert ist proportional zur Lichtquellenwellenlänge gemäß folgender Formel:

$$U_{ref} \simeq LQW/(2*n)/\varepsilon_{33}$$

mit

LQW: Lichtquellenwellenlänge
n: Brechungsindex des Substrats des Phasenmodulators 4 (z. B. Lithium-Niobat)
$e_{33}$: elektro-optischer Koeffizient.

Die Größen n und $\varepsilon_{33}$ sind temperaturabhängig. Diese Temperaturabhängigkeit sowie die Temperatur selbst müssen bekannt sein. Die Abhängigkeit von der Temperatur ist über eine Eichung bei konstanter Lichtquellenwellenlänge erfaßbar. Die Temperatur selbst ist mittels eines Temperatursensors 11 am Phasenmodulator 4 zu messen.

Die Kompensation der Skalenfaktoränderung $\Delta Sf$ bzw. der Änderung der Lichtquellenwellenlänge erfolgt dann gemäß nachfolgender Beziehung:

$$\Delta Sf = K_1 * (U_{ref} - K_2 * T)$$

Dabei ist $K_2$ die Änderung der Verstärkung bei konstanter Wellenlänge und variabler Temperatur und $K_1$ ein Proportionalitätsfaktor. Die Konstanten K1 und K2 müssen in einer Eichprozedur bestimmt werden und sind im Softwareprogramm für die Skalenfaktorkompensation bzw. die Kompensation der Lichtquellenwellenlänge zu berücksichtigen.

Ein wesentlicher Vorteil der Erfindung ist, daß die Regellogik 8, die den maximalen Phasenhub am Phasenmodulator 4 auf $2\pi$ einstellt. Bestandteil einer Closed-Loop Elektronik ist, wie sie in der oben erwähnten Druckschrift EP-A1-0 441 998 und insbesondere in der EP-A-0 551 537 beschrieben ist. Der oben angegebene Zusammenhang wird zur Kompensation der Skalenfaktoränderung $\Delta Sf$ durch Wellenlängenänderung benutzt.

**Patentansprüche**

1. Verfahren zur Kompensation von Wellenlängenänderungen der Lichtquelle (1) und damit des wellenlängenabhängigen Skalenfaktors eines faseroptischen Interferometers mit geschlossenem Regelkreis zur Drehratenmessung, bei dem

- zwei aus der Lichtquelle (1) stammende polarisierte und durch Strahlteilung erzeugte Lichtstrahlen in einem Phasenmodulator (4) durch ein auf Phasenhübe von $2\pi$ begrenztes Signal moduliert, sodann in entgegengesetzten Richtungen in eine Faserspule (5) eingestrahlt und anschließend wiedervereinigt werden,

- das entstehende Interferenzbild einen Fotodetektor (6) beaufschlagt, dessen der Lichtintensität des Interferenzbildes entsprechendes Ausgangssignal nach Analog/Digitalwandlung (7) über eine digitale Regelelektronik (8, 12) ein Stellsignal liefert, das analog-digital gewandelt zur Kompensation von nicht-reziproken Phasenverschiebungen der Lichtstrahlen am Phasenmodulator (4) dient, wobei die Analogspannung des das Stellsignal umsetzenden Digital/Analogwandlers (9) so verstärkt wird, daß der maximale Phasenhub im Phasenmodulator $2\pi$ entspricht,

**dadurch gekennzeichnet, daß**

- aus dem Stellwert der Regelelektronik (8), die den maximalen Modulationshub am Phasenmodulator (4) auf $2\pi$ regelt, und der am Phasenmodulator (4) gemessenen Temperatur (11) die Änderung der Wellenlänge der Lichtquelle (1) berechnet wird, und mit dem Ergebnis dieser Berechnung die Änderung des Skalenfaktors aufgrund einer Wellenlängenänderung rechnerisch kompensiert wird.

**Claims**

1. Process for the compensation of wavelength changes of the light source (1) and thus of the wavelength-dependent scale factor of a fibre-optic interferometer having a closed control loop for measuring a rate of rotation, wherein

- two light beams originating from the light source (1) and polarized and generated by beam splitting are modulated in a phase modulator (4) by a signal limited to phase ranges of $2\pi$, are then injected in opposite directions into a fibre coil (5) and are subsequently recombined,

- the interference pattern produced acts upon a photodetector (6), the output signal of which, which corresponds to the light intensity of the interference pattern, delivers, after analog/digital conversion (7) via a digital electronic control system (8, 12), a setting signal which, subjected to analog/digital conversion, serves for the compensation of non-reciprocal phase shifts of the light beams at the phase modulator (4), the analog voltage of the digital/analog converter (9) converting the setting signal being amplified so that the maximum phase range in the phase modulator corresponds to 2π,

characterized in that

- the change of the wavelength of the light source (1) is computed from the effective variable of the electronic control system (8), which regulates the maximum modulation range at the phase modulator (4) to 2π, and the temperature (11) measured at the phase modulator (4), and the change of the scale factor on account of a wavelength change is arithmetically compensated for by the result of this computation.

d'onde est compensée mathématiquement avec le résultat de ce calcul.

**Revendications**

1. Procédé de compensation des changements de la longueur d'onde de la source de lumière (1) et donc du facteur d'échelle d'un interféromètre à fibre optique qui dépend de la longueur d'onde, avec un circuit de réglage fermé pour la mesure de la vitesse de rotation, dans lequel

- deux faisceaux lumineux polarisés émis par la source de lumière (1) et produits par division du rayonnement sont modulés dans un modulateur de phase (4) par un signal limité à des amplitudes de déphasage de 2π, puis injectés dans des sens opposés dans une bobine de fibre (5) et réunis à nouveau,
- l'image interférentielle produite est transmise à un photodétecteur (6) dont le signal de sortie correspondant à l'intensité lumineuse de l'image interférentielle fournit par l'intermédiaire d'une électronique de réglage numérique (8, 12), après conversion analogique/numérique (7), un signal de réglage qui, modifié de manière analogique-numérique, sert à compenser des déphasages non réciproques des faisceaux lumineux sur le modulateur de phase (4), la tension analogique du convertisseur numérique-analogique (9) transformant le signal de réglage étant amplifiée de telle façon que l'amplitude de déphasage maximale dans le modulateur de phase correspond à 2π,

**caractérisée en** ce que

- le changement de la longueur d'onde de la source de lumière (1) est mesuré à partir de la valeur de réglage de l'électronique de réglage (8) qui règle l'amplitude de déphasage maximale sur le modulateur de phase (4) sur 2π, et de la température (11) mesurée sur le modulateur de phase (4), et que la variation du facteur d'échelle due à un changement de la longueur